# EUROPÄISCHE PATENTSCHRIFT

(11) **EP 2 413 409 B1**
(45) Veröffentlichungstag und Bekanntmachung des Hinweises auf die Patenterteilung: **25.11.2015**
(21) Anmeldenummer: 10008014.2
(22) Anmeldetag: 30.07.2010
(51) Int. Cl.: H01M 8/04, H01M 8/06

(54) **Zentrale Medienversorgungseinheit für Reformer-Brennstoffzellen-Systeme**
Central media supply unit for reformer fuel cell systems
Unité d'alimentation centrale en fluide pour systèmes de cellules de combustible de réformateur

(43) Veröffentlichungstag der Anmeldung: 01.02.2012
(73) Patentinhaber: Truma Gerätetechnik GmbH & Co. KG, 85640 Putzbrunn (DE)
(72) Erfinder: Stohldreier, Eilhard, 82327 Tutzing (DE); Frank, Reinhard, 80799 München (DE); Gartmeier, Andreas, 81667 München (DE); Schiegl, Andreas, 82042 Oberhaching (DE); Butenko, Sergej, 81667 München (DE)
(74) Vertreter: Müller Hoffmann & Partner

(56) Entgegenhaltungen:
- US-A1- 2003 235 731
- US-A1- 2006 151 495

## Beschreibung

Die Erfindung betrifft eine Medienversorgungseinheit für ein Reformer-Brennstoffzellen-System sowie nebengeordnete Verfahren zum Regeln von Medienströmen für ein derartiges Reformer-Brennstoffzellen-System.

Insbesondere betrifft die Erfindung eine Vorrichtung und nebengeordnete Verfahren zum Messen, Mischen, Dosieren und Verteilen von Luft und gasförmigen bzw. flüssigen Kohlenwasserstoffen auf verschiedene Teilsysteme eines Reformer-Brennstoffzellen-Systems. Zudem werden verschiedene Regelstrategien für die Medienströme offenbart.

Ein bevorzugter Anwendungsbereich für ein derartiges Reformer-Brennstoffzellen-System mit einer Leistungsgröße von wenigen Watt bis mehreren Kilowatt ist der Einsatz als APU-System (Auxiliary Power Unit) für die Bordstromvorsorgung in Freizeitfahrzeugen, Nutzfahrzeugen, Pkws und Booten bzw. Yachten. Ebenso in Frage kommt der Einsatz als Stromgenerator für Off-Grid-Anwendungen bzw. Kraft-Wärme-Kopplungssysteme für die dezentrale Energieversorgung. Als bevorzugte Brennstoffe dienen Propan, Butan bzw. Propan-Butan-Gemische (Flüssiggas). Jedoch sind auch andere flüssige oder gasförmige KohlenwasserstoffVerbindungen (zum Beispiel Erdgas, Diesel, JP-8, Benzin, Methanol, Ethanol und Bio-Treibstoffe) bei entsprechender Brennstoffaufbereitung ebenfalls einsetzbar.

Brennstoffzellen benötigen zur Erzeugung von elektrischer und thermischer Energie als Reaktanden Wasserstoff und (Luft-)Sauerstoff. Es sind verschiedene Reformierungsverfahren bekannt, wie zum Beispiel Dampfreformierung, autotherme Reformierung, partielle Oxidation oder Cracken, bei denen wasserstoffhaltiges Gas durch die Umwandlung von gasförmigen und flüssigen Kohlenwasserstoffen (Kraftstoff) erzeugt wird. Diese Verfahren sind meist sehr komplex und erfordern einen hohen apparativen und regelungstechnischen Aufwand. In der Regel weisen sie eine Vielzahl von Einzelkomponenten wie zum Beispiel Reformierreaktoren, Shift-Stufen, Gasfeinreinigungsstufen, Wärmetauscher und Verdampfer auf. Diese Einzelkomponenten benötigen unterschiedliche gasförmige und/oder flüssige Medien als Reaktanden, für Kühlzwecke oder für den Betrieb von Regelbrennern (katalytisch, konventionell). Das Gleiche gilt für die anoden- und kathodenseitige Medienversorgung der Brennstoffzelle unabhängig vom Typ und Wirkprinzip.

Es ist bekannt, dass die Bereitstellung der Medien für die Reformerteilsysteme und die Brennstoffzelle über separate, für jedes Teilsystem voneinander getrennte Medienversorgungseinheiten wie zum Beispiel Pumpen. Gebläse, Verdichter mit zusätzlichen entsprechenden Messeinrichtungen (Messung von Massen- und/oder Volumenströmen, Temperaturen, Drücken, Leitfähigkeiten und so weiter) sowie Regeleinrichtungen (Ventile, Blenden, Drosseln, Klappen und so weiter) erfolgt. Dies erfordert einen hohen apparativen, verfahrenstechnischen und regelungstechnischen Aufwand mit entsprechend hohen Kosten.

Aus der US 2006/0151495 A1 ist eine Medienversorgungseinrichtung bekannt. Die Medien werden über eine einsteckbare Patrone zugeführt und über Leitungseinrichtungen, Messvorrichtungen, Regelvorrichtungen und Mischvorrichtungen einem Reformer-Brennstoffzellen-System zugeführt, welches Energie zum Betrieb eines Computerlaptops bereitstellt.

Der Erfindung liegt die Aufgabe zugrunde, ein vereinfachtes System sowie ein entsprechendes Verfahren anzugeben, mit dem die Medienversorgung eines Reformer-Brennstoffzellen-Systems sichergestellt werden kann.

Die Erfindung wird gelöst durch eine zentrale Medienversorgungseinheit gemäß Anspruch 1. Ein Verfahren für eine derartige Medienversorgungseinheit sowie Verfahren mit bestimmten Regelstrategien für die Medienströme in der Medienversorgungseinheit sind in nebengeordneten Ansprüchen angegeben.

Eine zentrale Medienversorgungseinheit für ein Reformer-Brennstoffzellen-System ist ausgestattet mit einer Leitungseinrichtung zum Bereitstellen von Leitungen, in denen Medien zu führen sind, wobei als Medien Luft und Kraftstoff (gasförmige oder flüssige Kohlenwasserstoffe) vorgesehen sind, mit einem an der Leitungseinrichtung vorgesehenen Luftversorgungsanschluss zum Anschließen einer Luftversorgungseinrichtung, mit einem an der Leitungseinrichtung vorgesehen Kraftstoffanschluss zum Anschließen einer Kraftstoffversorgungseinrichtung und mit an der Leitungseinrichtung vorgesehenen Komponenten-Anschlüssen zum Anschließen von Komponenten des Reformer-Brennstoffzellen-Systems. Wenigstens einige der Leitungen sind als Medienteilströmungswege ausgebildet, zum Führen von Luft und/oder Kraftstoff als jeweilige Medienteilströme zu den betreffenden Komponenten-Anschlüssen. In wenigstens einem der Medienteilströmungswege ist eine Messvorrichtung, eine Regelvorrichtung und/oder eine Mischvorrichtung vorgesehen. Durch die jeweiligen Messvorrichtungen. Regelvorrichtungen und/oder Mischvorrichtungen ist das jeweils zugeführte Medium in einem für die betreffende Komponente geeigneten Zustand (z. B. Massenstrom, Volumenstrom, Druck, Temperatur, Mischverhältnis) am Komponenten-Anschluss zuführbar. Die Leitungseinrichtung kann als massiver Block ausgebildet sein, wobei die Messvorrichtungen, die Regelvorrichtungen und/oder die Mischvorrichtungen als Komponenten innen in oder außen an dem massiven Block befestigbar sind. Auch die Anschlüsse, nämlich insbesondere der Luftversorgungsanschluss, der Kraftstoffanschluss, die Komponenten-Anschlüsse und gegebenenfalls ein Wasser- bzw. Flüssigkeitsanschluss, können an dem massiven Block vorgesehen sein.

Als massiver Block ist eine blockartige, insbesondere einstückige oder aus zwei Hälften bestehende Komponente zu verstehen, in deren Innerem unter anderem die Leitungen bzw. Medienteilströmungswege ausgebildet sind. Auch ein Teil der Mess-, Regel- oder Mischvorrichtungen kann - wenigstens teilweise - in dem Block oder auch außen davon angeordnet sein. Die blockartige Leitungseinrichtung bildet insoweit einen Leitungskörper, in dem alle wesentlichen Leitungen für die zentrale Medienversorgung vorgesehen sind.

Damit ist es mit Hilfe der Erfindung möglich, möglichst viele der erforderlichen Komponenten in eine zentrale Medienversorgungseinheit zu integrieren, in der das Messen, Mischen, Dosieren und Verteilen der einzelnen Stoffströme in Kombination abläuft.

Der als Leitungseinrichtung dienende Block kann zum Beispiel als Guss- oder Frästeil aus Kunststoff oder Metall hergestellt sein. Im Idealfall ist außer der blockartigen Leitungseinrichtung keine weitere Leitung erforderlich. Dadurch reduziert sich zum Beispiel auch die Zahl der Dichtflächen und der Montageaufwand.

Weitere Vorteile sind:
- eine deutliche Verringerung der Vielzahl an Einzelkomponenten der Medienversorgung durch Verwendung von zentralen Versorgungseinheiten für alle Komponenten. Zum Beispiel kann ein größer dimensioniertes Zentralluftgebläse (Luftversorgungseinrichtung) anstelle vieler einzelner Luftversorgungseinheiten wie Pumpen, Lüfter, Gebläse etc. vorgesehen werden.
- Deutliche Verringerung des Eigenenergieverbrauchs der kompletten Medienversorgung durch Reduzierung der Einzelkomponenten, dadurch höhere Wirkungsgrade des Gesamtsystems.
- Reduzierung der medienführenden Teile wie Rohre, Verschraubungen inklusive der dafür notwendigen Befestigungen und Halterungen.
- Deutliche Kostenreduzierung aufgrund geringerer Komponentenanzahl.
- Bessere und einfachere Montage- und Prüffähigkeit.
- Erhöhung der Betriebssicherheit.

Die Komponenten des Reformer-Brennstoffzellen-Systems können ausgewählt sein aus der Gruppe:
- Reformer-Teilsysteme, die nur mit Kraftstoff zu versorgen sind,
- Reformer-Teilsysteme, die nur mit Luft zu versorgen sind, wobei die Luft als Kühlluft und/oder als Reaktionsluft bereitstellbar ist;
- Reformer-Teilsysteme, die mit Kraftstoff-Luft-Gemischen zu versorgen sind;
- Brennstoffzelle, die mit Luft zu versorgen ist, wobei die Luft als Kühlluft und/oder als Reaktionsluft bereitstellbar ist.

Ein Reformer besteht üblicherweise aus mehreren Teilsystem, die später noch im Zusammenhang mit der Figurenbeschreibung näher erläutert werden. Diesen Teilsystemen ist - wie oben dargestellt - teilweise nur Kraftstoff (zum Beispiel Flüssiggas) oder nur Luft oder auch ein Kraftstoff-Luft-Gemisch zuzuführen. Die Brennstoffzelle benötigt hingegen Luft in erster Linie als Reaktionsluft, aber auch als Kühlluft, um die Temperatur der Brennstoffzelle optimal einzustellen.

In der Kraftstoffzuleitung kann eine Kraftstoffaufbereitungsvorrichtung vorgesehen sein. So kann es zum Beispiel zweckmäßig sein, den Kraftstoff zu entschwefeln oder auch eine Druckerhöhungskomponente (zum Beispiel Pumpe) vorzusehen. Auch die Kraftstoffaufbereitungsvorrichtung kann in oder an der blockartigen Leitungseinrichtung vorgesehen sein.

An der Leitungseinrichtung kann ein Flüssigkeitsanschluss vorgesehen sein, zum Zuführen einer Flüssigkeit, wobei die Flüssigkeit Wasser oder ein Wasser/Flüssigkraftstoff-Gemisch sein kann. Bei bestimmten Anwendungsfällen kann es zweckmäßig sein, Wasser bzw. ein Gemisch dem Reformer-Brennstoffzellen-System zuzuführen, sodass die Zumischung, Regelung und Messung des Wassers bzw. Wasser-Flüssigkraftstoff-Gemisches innerhalb der zentralen Medienversorgungseinheit analog zu dem Luft- oder Kraftstoffzweig auszugestalten ist.

Es kann eine Steuerungseinrichtung vorgesehen sein, zum Messen und Regeln der einzelnen Medienteilströme in den Medienteilströmungswegen. So kann die Steuerungseinrichtung die Medienteilströme überwachen und gegebenenfalls - unter Berücksichtigung von eingespeicherten oder von außen vorgegebenen Vorgaben - Maßnahmen wie zum Beispiel das Ansteuern eines Regelventils - vornehmen, um den betreffenden Medienteilstrom in dem geeigneten Zustand, d. h. mit der gewünschten Qualität (Menge, Temperatur, etc.) zur Verfügung zu stellen.

Die Steuerungseinrichtung kann mit der übergeordneten Steuerung des Reformer-Brennstoffzellen-Systems kommunizieren.

Es kann wenigstens eine in einen der Medienteilströmungswege integrierte Messvorrichtung vorgesehen sein, wobei der in dem betreffenden Medienteilströmungsweg strömende Medienteilstrom in Abhängigkeit von Messwerten von der betreffenden integrierten Messvorrichtung regelbar ist. Damit wird der Medienteilstrom mit Hilfe der Messvorrichtung überwacht und mit Hilfe einer zugeordneten Regelvorrichtung geregelt. Maßgeblich ist dabei der Messwert der integrierten Messvorrichtung.

Ergänzend oder alternativ kann auch an der Steuerungseinrichtung ein Eingang zum Anschließen einer externen, nicht in einem der Medienteilströmungswege vorgesehenen Messvorrichtung vorgesehen sein, wobei wenigstens einer der Medienteilströme in Abhängigkeit von Messwerten von der externen Messvorrichtung regelbar ist. In diesem Fall also kann eine Messvorrichtung außerhalb der zentralen Medienversorgungseinheit, zum Beispiel am Reformer-Brennstoffzellen-System angeordnet sein. Diese Messvorrichtung liefert Messwerte, die für die Regelung der Medienteilströme in der zentralen Medienversorgungseinheit maßgeblich sind.

An der Leitungseinrichtung kann eine Flanschplatte vorgesehen sein, wobei die Komponenten-Anschlüsse an der Flanschplatte angeordnet sind. Auf diese Weise kann die Leitungseinrichtung mit ihrer Flanschplatte sehr leicht direkt am Reformer-Brennstoffzellen-System bzw. an einer Isolierschicht des Reformer-Brennstoffzellen-Systems befestigt werden, sodass zwischen der zentralen Medienversorgungseinheit und dem eigentlichen Reformer-Brennstoffzellen-System keine großen Wege überbrückt werden müssen. Die Flanschplatte erleichtert zudem die Befestigung.

Ein Komponentenanschluss kann als Rohranschluss an der Flanschplatte vorgesehen sein, an dem ein Luft/Kraftstoff-Gemisch bereitstellbar ist. Der Rohranschluss kann ein luftführendes Außenrohr und ein kraftstoffführendes Innenrohr aufweisen, wobei letzteres in dem Außenrohr z. B. konzentrisch angeordnet ist. Dabei kann eine Auslassöffnung des Innenrohrs in einem Bereich vorgesehen sein, der außerhalb der Leitungseinrichtung angeordnet ist. Auf diese Weise lässt sich die Ausgabe des Kraftstoffs in einen Bereich verlagern, der sich nicht mehr innerhalb der Leitungseinrichtung, also des Leitungsblocks, sondern außerhalb, also bereits nahe bei dem Reformer-Brennstoffzellen-System befindet. Dies kann die Betriebssicherheit erhöhen.

Es wird ein Verfahren für eine zentrale Medienversorgung für ein Reformer-Brennstoffzellen-System angegeben, mit den Schritten
- Bereitstellen einer blockartigen Leitungseinrichtung, mit Versorgungsanschlüssen zum Zuführen von Medienströmen zu der Leitungseinrichtung und mit Komponenten-Anschlüssen, an denen Komponenten des Reformer-Brennstoffzellen-Systems an der Leitungseinrichtung anschließbar sind;
- Zuführen von Medienströmen zu den Versorgungsanschlüssen an der Leitungseinrichtung, wobei als Medien Luft und Kraftstoff vorgesehen sind;
- Aufteilen der Medienströme in der Leitungseinrichtung und Führen der Medienströme zu den Komponenten-Anschlüssen;
- während des Durchführens der Medienströme durch die Leitungseinrichtung Messen, Regeln und/oder Mischen der Medienströme in der Leitungseinrichtung.

Mit Hilfe dieses Verfahrens ist es also möglich, die Medien Luft und Kraftstoff einheitlich von außen zu der Leitungseinrichtung zu führen und erst innerhalb der Leitungseinrichtung in geeigneter Weise aufzuteilen, zu konditionieren und gegebenenfalls auch zu mischen. Danach sind die Medienteilströme in einem Zustand, wie er jeweils für die entsprechenden Komponenten des Reformer-Brennstoffzellen-Systems geeignet ist, sodass sie unmittelbar diesem zugeführt werden können.

Ein Verfahren zum Regeln von Medienströmen für ein Reformer-Brennstoffzellen-System weist die Schritte auf
- Zuführen eines Medienstroms durch eine Medienzuführeinrichtung zu einer Medienversorgungseinrichtung;
- Aufteilen des Medienstroms in mehrere Teilmedienströme, die jeweils durch einen Medien-Teilströmungsweg strömen, wobei wenigstens ein Teil der Medien-Teilströmungswege eine Regelvorrichtung aufweist;
- vollständiges Öffnen von einer Regelvorrichtung in einem der Medien-Teilströmungswege und entsprechendes Einstellen der Medienzuführeinrichtung, um in diesem Medien-Teilströmungsweg die zum Betrieb des Reformer-Brennstoffzellen-Systems erforderliche Medienstrommenge zu erhalten;
- Einstellen der Regelvorrichtungen in den anderen Medien-Teilströmungswegen, um in diesen Medien-Teilströmungswegen die zum Betreiben des Reformer-Brennstoffzellen-Systems erforderlichen Medienstrommengen zu erhalten.

Unter einem "vollständigen Öffnen" ist in Bezug auf den gesamten vorliegenden Text zu verstehen, dass eine Regelvorrichtung bis zu einem vorgegebenen Öffnungsgrenzwert oder darüber hinaus, z. B. bis zu oder über 90% geöffnet wird.

Die Medienzuführeinrichtung kann zum Beispiel ein Gebläse oder eine Pumpe sein, mit der das betreffende Medium, also zum Beispiel Luft, Kraftstoff oder Wasser zu der Medienversorgungseinrichtung zugeführt wird.

Gemäß diesem Verfahren ist stets sichergestellt, dass eine der Regelvorrichtungen vollständig geöffnet ist, sodass die entsprechende Medienzuführeinrichtung im optimalen Arbeitsbereich mit optimalem Energieeinsatz betrieben werden kann. Der dadurch erzeugte Medien-Teilstrom reicht genau aus, um die entsprechende Komponente des Reformer-Brennstoffzellen-Systems zu versorgen. Andererseits muss der Medien-Teilstrom nicht durch die Regelvorrichtung gedrosselt werden, weil von der Medienzuführeinrichtung eben nicht zu viel Medium bzw. Medium mit zu hohem Druck bereitgestellt wird.

Bei einer Weiterentwicklung des Verfahrens sind die Schritte vorgesehen:
- Festlegen von Soll-Medienstrommengen für die Medien-Teilströmungswege in Abhängigkeit von den Erfordernissen eines Betriebs des Reformer-Brennstoffzellen-Systems;
- Messen der Medienstrommengen in den Medien-Teilströmungswegen und Überwachen, ob in dem jeweiligen Medien-Teilströmungsweg die geforderte Soll-Medienstrommenge bereitgestellt wird;
- Einstellen der jeweiligen Regelvorrichtung derart, dass die geforderte Soll-Medienstrommenge in dem Medien-Teilströmungsweg erreicht wird;
- wenn festgestellt wird, dass eine Medien-Teilstrommenge auch bei vollständig geöffneter Regelvorrichtung nicht erreichbar ist, entsprechendes Einstellen der Medienzuführeinrichtung und Erhöhen der gesamten Medienstrommenge bzw. des Drucks;
- entsprechendes Einstellen der anderen, nicht vollständig geöffneten Regelvorrichtungen, um jeweils die geforderte Soll-Medienstrommenge in den Medien-Teilströmungswegen zu erreichen.

Diesem Regelverfahren liegt der Gedanke zugrunde, dass es zur Erhöhung der Abgabeleistung des Reformer-Brennstoffzellen-Systems sinnvoll ist, den Eigenenergieverbrauch des Systems so gering wie möglich zu halten. Die als Medienzuführeinrichtung zum Beispiel dienende Luftversorgungseinheit - zumeist ein Gebläse, eine Pumpe oder ein Verdichter - stellt im Gesamtsystem den größten Verbraucher dar, sodass es das Ziel ist, die Luftversorgungseinheit mit möglichst geringem Energiebedarf zu betreiben.

Das oben angegebene Verfahren ermöglicht somit die folgende Regelstrategie:
Jedes Reformer-Teilsystem und die Brennstoffzelle benötigen eine definierte Luftmenge abhängig vom Betriebszustand. Diejenige Regelvorrichtung übernimmt im jeweiligen Teilluftstrom im Regelkreis die Leitfunktion bezüglich der Regelung der Luftversorgungseinheit (Medienzuführeinrichtung), die ihre definierte Luftmenge bei maximal geöffnetem Regelglied gerade erreicht. Alle anderen Teilluftströme der anderen Teilsysteme werden über die zugeordneten Regelglieder eingestellt, wobei dort die Regelvorrichtungen dann meist nicht voll geöffnet sein dürften. Die Leitfunktion kann bei unterschiedlichen Betriebszuständen unter den verschiedenen Regelvorrichtungen wechseln.

Im stabilen Betriebszustand ist damit immer mindestens eine Regelvorrichtung eines Teilluftstroms vollständig geöffnet und übernimmt die Leitfunktion für die Regelung der Luftversorgungseinheit. Die anderen Regelvorrichtungen haben unterschiedliche Öffnungszustände je nach Luftbedarf der von ihnen zu versorgenden Reformerkomponenten oder der Brennstoffzelle.

Wenn festgestellt wird, dass eine andere Reformerkomponente oder auch die Brennstoffzelle mehr Luft benötigt, wird die zu dieser Komponente zugehörige Regelvorrichtung weiter geöffnet bis hin zur vollständigen Öffnung. Reicht der dadurch von der Medienversorgungseinheit bereitgestellte Luftstrom nicht aus, übernimmt diese Regelvorrichtung die Führungs- bzw. Leitfunktion für die Regelung der Luftversorgungseinheit. Dadurch wird erreicht, dass die Luftversorgungseinheit mehr Luftvolumen bzw. Druck zur Verfügung stellt, sodass schließlich eine ausreichende Luftversorgung der Komponente bzw. Brennstoffzelle erreicht werden kann. Alle anderen Regelvorrichtungen der anderen Teilluftströme passen sich dem neuen Luftvolumen an und regeln sich entsprechend ein. Insbesondere werden die Regelvorrichtungen dort die Teilströmungswege bzw. deren Querschnitte verringern, um zu große Teilluftströme zu verhindern.

Das Gleiche gilt im umgekehrten Fall, wenn die Reformerkomponente oder Brennstoffzelle, welche aktuell die Leitfunktion inne hat, weniger Luft benötigt. Dann reduziert deren Regelvorrichtung den Luftvolumenstrom der zentralen Luftversorgungseinheit. Die anderen Regelvorrichtungen der anderen Teilluftströme passen sich an, sodass gegebenenfalls schließlich wieder eine andere Regelvorrichtung die Führungsfunktion übernimmt, nämlich dann, wenn diese andere Regelvorrichtung bereits vollständig geöffnet ist.

Dementsprechend kann das oben angegebene Verfahren durch den Schritt ergänzt werden, dass, wenn festgestellt wird, dass keine der Regelvorrichtungen vollständig geöffnet ist, ein entsprechendes Einstellen der Medienzuführeinrichtung (zum Beispiel der Luftversorgungseinheit) und Vermindern der gesamten Medienstrommenge so lange erfolgt, bis festgestellt wird, dass eine der Regelvorrichtungen vollständig geöffnet ist.

Das Regelungsprinzip kann sowohl für Luftströme als auch für Kraftstoffströme eingesetzt werden.

Ein weiteres Verfahren zum Regeln von Medienströmen weist die Schritte auf:
- Zuführen eines als Medienstrom dienenden Kraftstoffstroms und eines als Medienstrom dienenden Luftstroms zu einer Medienversorgungseinrichtung, wobei wenigstens einer der Medienströme durch eine Medienzuführeinrichtung mit einem konstanten Vordruck zugeführt wird;
- in der Medienversorgungseinrichtung Aufteilen des Kraftstoffstroms und des Luftstroms in mehrere Medien-Teilströme;
- in der Medienversorgungseinrichtung Regeln der Medien-Teilströme in Abhängigkeit von einem aktuellen Betriebszustand des Reformer-Brennstoffzellen-Systems.

Dieses Verfahren beruht auf dem Prinzip, dass zum Beispiel auf der Kraftstoffseite (flüssig oder gasförmig) und/oder auf der Luftseite ein konstanter Vordruck zur Verfügung gestellt wird, während die Regelvorrichtungen in den einzelnen Teilzweigen die Medienteilströme entsprechend dem aktuellen Betriebszustand der Reformerteilsysteme oder Brennstoffzelle regeln. Bevorzugt wird dabei die Kraftstoffseite, da die Bereitstellung eines bestimmten Druckniveaus hier einen deutlich geringeren Energiebedarf für die Druckerzeugungskomponente (Kraftstoffversorgungseinrichtung, zum Beispiel eine Membranpumpe) erfordert als auf der Luftseite.

Der Kraftstoff (aber auch die Luft) kann durch die Druckerzeugungskomponente mit konstantem Vordruck bereitgestellt werden, sodass im Inneren der Medienversorgungseinheit bzw. Medienversorgungseinrichtung die Medien-Teilströme in der gewollten Weise geregelt werden können.

Diese und weitere Vorteile und Merkmale der Erfindung werden nachfolgend anhand von Beispielen unter Zuhilfenahme der begleitenden Figuren näher erläutert. Es zeigen:
- **Fig. 1**: den schematischen prinzipiellen Aufbau einer zentralen Medienversorgungseinheit;
- **Fig. 2**: eine besondere Ausführungsform eines Reformer-BrennstoffzellenSystems mit einer zentralen Medienversorgungseinheit;
- **Fig. 3**: eine Perspektivansicht einer zentralen Medienversorgungseinheit;
- **Fig. 4**: eine Teilschnittdarstellung eines Komponenten-Anschlusses;
- **Fig. 5**: ein Beispiel für eine Messvorrichtung in der Medienversorgungseinheit.

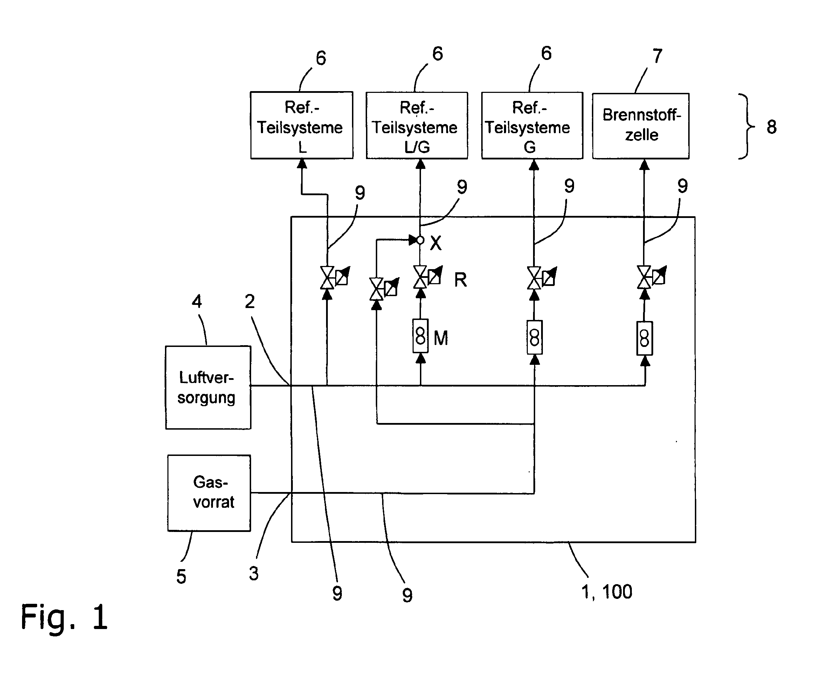

Fig. 1 zeigt den prinzipiellen Aufbau einer zentralen Medienversorgungseinheit 1.

An der Medienversorgungseinheit 1 ist ein Luftversorgungsanschluss 2 und ein Kraftstoffanschluss 3 vorgesehen.

Über den Luftversorgungsanschluss 2 kann Luft von einer Luftversorgungseinrichtung 4, zum Beispiel einem Gebläse, einer Luftpumpe oder einem Verdichter, zugeführt werden.

Analog kann über den Kraftstoffanschluss 3 Kraftstoff von einem Kraftstoffvorrat 5 zugeführt werden, wozu auch zum Beispiel eine Kraftstoffpumpe vorhanden sein kann.

Der Kraftstoffvorrat 5 bevorratet insbesondere Kohlenwasserstoffe in gasförmiger oder flüssiger Form, wie oben bereits in der Beschreibungseinleitung beschrieben. Der Kraftstoff wird über eine Leitung zu dem Kraftstoffanschluss 3 zugeführt und kann dadurch in die Medienversorgungseinheit 1 gelangen.

In der Zuleitung können verschiedene Kraftstoffaufbereitungsvorrichtungen (zum Beispiel Entschwefelung, Druckerhöhungskomponenten wie Pumpen etc.) und/oder Regel- und Absperrarmaturen (zum Beispiel Ventile) und/oder Messeinrichtungen (zum Beispiel zum Messen von Druck, Volumenstrom, Massenstrom, etc.) vorgesehen sein. Diese genannten Komponenten können teilweise auch komplett in die zentrale Medienversorgungseinheit 1 integriert sein, wodurch zusätzliche Verbindungs- und Leitungselemente zwischen den Komponenten entfallen.

Innerhalb der Medienversorgungseinheit 1 werden die Luft- und Kraftstoffströme (Medienteilströmungswege 9) aufgeteilt, in Abhängigkeit von dem Bedarf von stromab angeordneten Reformer-Teilsystemen 6 und einer Brennstoffzelle 7. Die Reformer-Teilsysteme 6 und die Brennstoffzelle 7 bilden zusammen ein Reformer-Brennstoffzellen-System 8.

Bezüglich dem Reformer-Brennstoffzellen-System 8 gilt es zu unterscheiden zwischen
- nur mit Kraftstoff versorgten Reformerkomponenten (Reformer-Teilsysteme G), wie zum Beispiel einen Reformierungsreaktor;
- nur mit Luft zu versorgenden Reformerkomponenten (Reformer-Teilsysteme L), wie zum Beispiel Shift-Stufen (Luftkühlung) oder Gasfeinreinigungsstufen (zum Beispiel Reaktionsluft für selektive Oxidation);
- Reformerkomponenten, die mit Kraftstoff-Luft-Gemischen betrieben werden (Reformer-Teilsysteme L/G), wie zum Beispiel Komponenten-interne Brenner (katalytisch oder konventionell) für Regel- und Aufheizzwecke oder Reformierungsreaktoren (zum Beispiel autotherme Reformierung);
- die mit Luft versorgte Brennstoffzelle 7 (Reaktions- und/oder Kühlluft).

Aus Fig. 1 ist ersichtlich, dass den verschiedenen Reformer-Teilsystemen 6 (L, L/G, G) jeweils Luft, Kraftstoff (G) oder ein Gemisch (L/G) zugeführt wird.

In den einzelnen Medienteilströmungswegen 9 im Inneren der Medienversorgungseinheit 1 können jeweils erforderliche Messvorrichtungen (M), Regelvorrichtungen (R) und Mischvorrichtungen (X) für die Kraftstoff- und Luftversorgung integriert sein. Dadurch können zusätzliche Verbindungs- und Leitungselemente zwischen den Komponenten entfallen. Die Mess- und Regelvorrichtungen M, R können in den jeweiligen Leitungen selbst bzw. auch in einem Leitungs-Bypass integriert sein.

Die Regelung der einzelnen Medienteilströme innerhalb der zentralen Medienversorgungseinheit 1 kann nach folgenden Prinzipen erfolgen:
- Regelung der Medienteilströme für jeden Zweig über eine im Zweig integrierte Messung (zum Beispiel über Massenstrom, Volumenstrom, Druck);
- Regelung mindestens eines Medienteilstroms in einem Zweig durch integrierte Messung (zum Beispiel Massenstrom, Volumenstrom, Druck), Regelung der restlichen Medienteilströme über externe Messgrößen (zum Beispiel Temperatur eines Reformer-Teilsystems 6, Lastanforderung an die Brennstoffzelle 7);
- Regelung aller Medienteilströme über externe Messgrößen.

In Fig. 1 nicht dargestellt, aber zusätzlich möglich für Anwendungsfälle, in denen auch Wasser oder Wasser-/Flüssigkraftstoff-Gemische dem Reformer-Brennstoffzellen-System 8 zugeführt werden müssen, ist die Zumischung, Regelung und Messung von Wasser bzw. des entsprechenden Gemisches innerhalb der Medienversorgungseinheit 1 analog zu den in Fig. 1 gezeigten Luft- oder Kraftstoffzweigen.

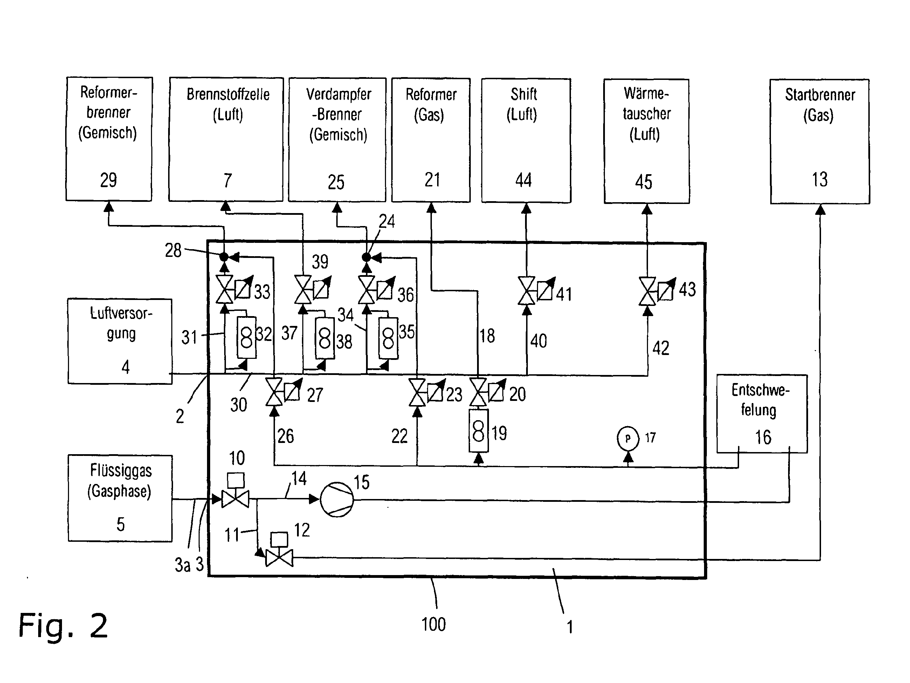

Fig. 2 zeigt eine Ausführungsform eines Reformer-Brennstoffzellen-Systems 8 mit der zentralen Medienversorgungseinheit 1 in detaillierterer Form.

Als Kraftstoff wird Flüssiggas aus dem Kraftstoffvorrat 5 entnommen und über eine Druckreduziereinrichtung (nicht dargestellt) auf den in Freizeitfahrzeugen, Nutzfahrzeugen und Booten standardisierten Betriebsdruck von 30 mbar abgesenkt.

Über eine Gaszuführungsleitung 3a und den Kraftstoffanschluss 3 wird das Flüssiggas zur zentralen Medienversorgungseinheit 1 geführt.

Innerhalb der zentralen Medienversorgungseinheit 1 dient ein erstes Magnetventil 10 als Absperrventil gegen die Gaszuführungsleitung 3a und ist während des Betriebs der Gasverbrauchseinrichtung geöffnet.

Über einen Abzweig 11 mit einem Magnetventil 12 wird Flüssiggas an einen Startbrenner 13 geleitet, der zum Aufheizen von Reformersystem 6 und Brennstoffzelle 7 dienen kann.

In einem zentralen Gasweg 14 sind eine Gaspumpe 15 - zum Hochsetzen des Gasdrucks - und eine Entschwefelungseinheit 16 - zum Entfernen von Odorierungsmitteln und sonstigen schwefelhaltigen Bestandteilen im Flüssiggas - sowie ein Drucksensor 17 zur Messung des Flüssiggasdrucks integriert.

Vom zentralen Gasweg 14 zweigt ein Teilgasweg 18 ab, in den eine Massenstrommesseinrichtung 19 und ein Proportionalventil 20 zum Dosieren der Gasmenge integriert sind. Der Teilgasweg 18 versorgt einen Reformierreaktor 21 des Reformersystems.

Vom zentralen Gasweg 14 geht in der gezeigten Ausführungsform ein Teilgasweg 22 ab, in den ebenfalls ein Proportionalventil 23 zur Dosierung der Gasmenge über eine Mischstelle 24 für die katalytischen Brenner eines Verdampferbrenners 25 integriert ist.

Analog dazu zweigt aus dem zentralen Gasweg 14 ein Teilgasweg 26 ab, in den ein Proportionalventil 27 zur Dosierung der Gasmenge über eine Mischstelle 28 für den katalytischen Brenner eines Reformerbrenners 29 eingebaut ist.

In die zentrale Medienversorgungseinheit 1 wird über einen zentralen Luftweg 30 Reaktions- und Kühlluft aus der Luftversorgungseinrichtung 4, zum Beispiel einem Gebläse, zugeführt.

Vom zentralen Luftweg 30 zweigt ein Teilluftweg 31 ab, der über die Mischstelle 28 den Reformerbrenner 29 mit Reaktionsluft versorgt. Die Luft im Teilluftweg 31 wird vor der Mischstelle 28 über eine Massenstrommesseinrichtung 32, die in einen Bypass integriert ist, und ein nachfolgendes Proportionalventil 33 zur Regelung des Luftmassenstroms geführt.

Analog ist die Luftversorgung des Verdampferbrenners 25 ausgestaltet: über einen Teilluftweg 34 wird über eine Massenstrommessvorrichtung 35 im Bypass-Betrieb und einem Proportionalventil 36 Reaktionsluft über die Mischstelle 24 dem Verdampferbrenner 25 zugeführt.

Die Reaktionsluftversorgung der Brennstoffzelle 7 erfolgt über einen Teilluftweg 37 mit einer integrierten Massenstrommessung 38 im Bypassbetrieb und einem Proportionalventil 39 zur Regelung des Luftstroms.

Von dem zentralen Luftweg 30 zweigen des Weiteren ein Teilluftweg 40 mit einem Proportionalventil 41 und ein Teilluftweg 42 mit einem Proportionalventil 43 ab, welche eine Shift-Stufe 44 und einen Wärmetauscher 45 mit Kühlluft versorgen. In letzteren beiden Teilluftwegen 40, 42 wird der jeweilige Teilluftstrom geregelt, und zwar über externe Regelparameter (Temperatur der Shift-Stufe 44 bzw. des Wärmetauschers 45).

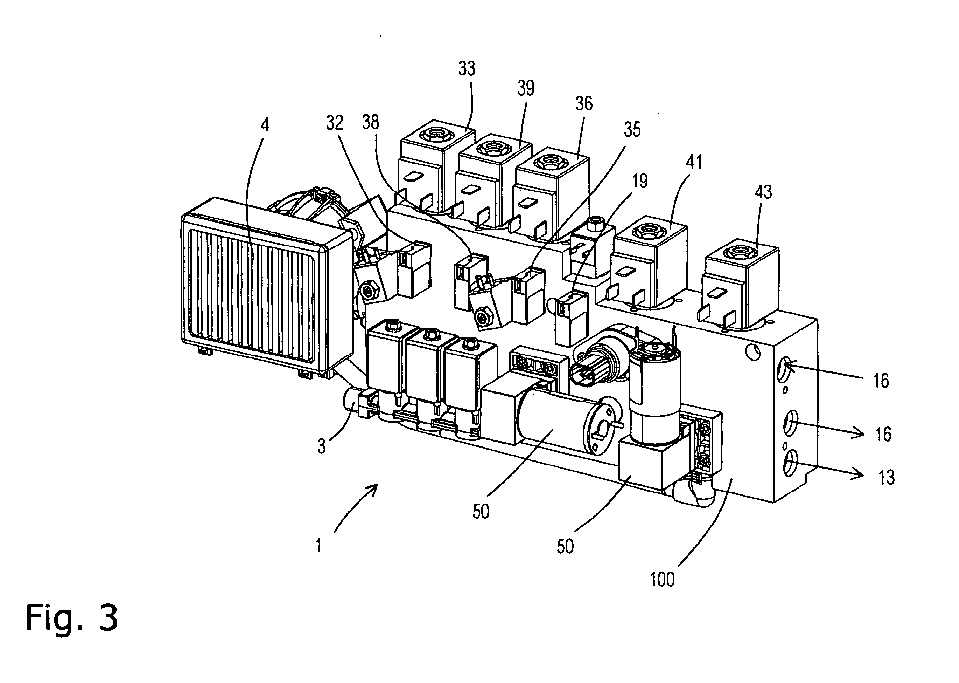

Fig. 3 zeigt den in Fig. 2 schematisch dargestellten Aufbau in Perspektivansicht.

Die Luftversorgungseinrichtung 4 ist als ein Luftgebläse mit Luftfilter realisiert.

Dementsprechend sind in den Fig. 2 und 3 gleiche Bezugszeichen für gleiche Bauelemente verwendet.

In Fig. 3 ist besonders gut erkennbar, dass die zentrale Medienversorgungseinheit 1 eine blockartige Leitungseinrichtung 100 aufweist, in der praktisch sämtliche Leitungen verlaufen. Die Leitungseinrichtung 100 ist im gezeigten Beispiel aus Kunststoff (zum Beispiel Spritzguss) hergestellt und weist bereits alle Leitungsbohrungen sowie auch Befestigungsorte und Sitze für die Proportionalventile und Messeinrichtungen (Sensoren) auf. Auf diese Weise können die zusätzlichen Komponenten der zentralen Medienversorgungseinheit 1 in einfacher Weise außen auf die Leitungseinrichtung 1 aufgesetzt werden, ohne dass weitere Leitungs- oder Rohrverbindungen bereitgestellt werden müssen. Vielmehr genügt es, durch Zwischenlegen einer Dichtung die entsprechenden Komponenten direkt an der Leitungseinrichtung 100 zu befestigen.

An der Stirnseite der Leitungseinrichtung 100 ist erkennbar, dass eine untere Leitung zu dem Startbrenner 13 geführt wird (analog zu Fig. 2). Entsprechend ist - durch Pfeile gezeigt - eine Leitung zu der Entschwefelungseinheit 16 und wieder zurück zur Leitungseinrichtung 100 dargestellt.

An der Leitungseinrichtung 100 können weitere Elemente, wie zum Beispiel Gebläse oder Pumpen befestigt werden, wie mit Bezugszeichen 50 gekennzeichnet.

Ebenso können von außen alle elektrischen Anschlüsse vorgenommen werden.

Grundsätzlich kann das Gehäuse, also die Leitungseinrichtung 100 aus jedem Material hergestellt werden, was der Spezifikation nach Gasdichtheit, Druckstabilität und/oder Temperaturbeständigkeit entspricht. Ein Rückbrennen der Gas-Luft-Gemisches im Rohr kann zusätzlich durch eine integrierte Flammsperre (nicht dargestellt) verhindert werden.

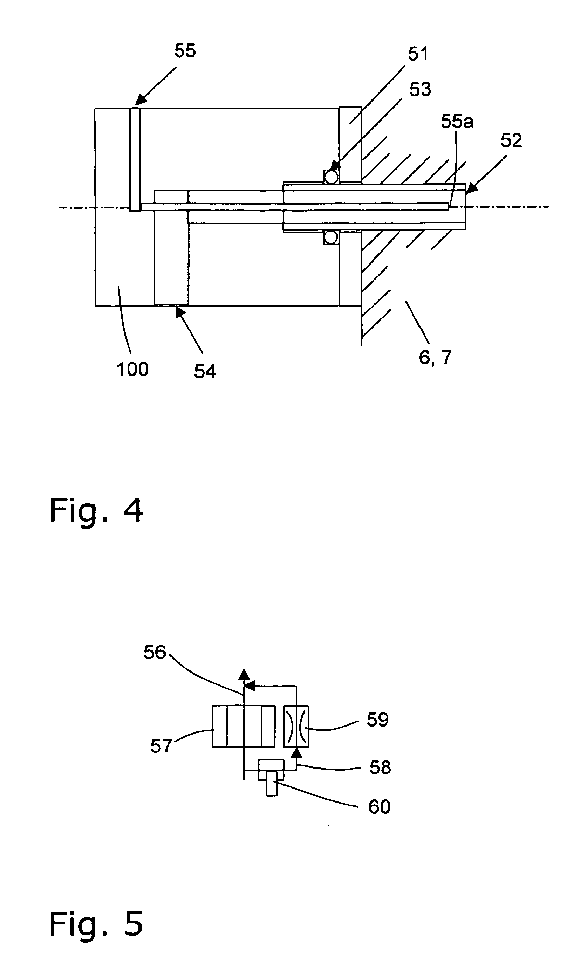

Fig. 4 zeigt ein Beispiel für die Anbindung der zentralen Medienversorgungseinheit 1 an ein Reformer-Teilsystem 6 oder die Brennstoffzelle 7.

Zur Vermeidung von zusätzlichen Verschraubungen und Rohrverbindungen kann die Medienversorgungseinheit 1 einfach und kostengünstig über eine Flanschplatte 51 mit Rohranschlüssen 52 und O-Ringdichtungen 53 an die Reformer-Teilsysteme 6 und die Brennstoffzelle 7 angebunden werden. Das bedeutet, dass die Flanschplatte 51 gleichermaßen die Reformer-Teilsysteme 6 und die Brennstoffzelle 7 berührt bzw. an diesen anliegt.

In Fig. 4 ist lediglich ein Rohranschluss 52 gezeigt. Wie sich aber insbesondere aus Fig. 2 ergibt, können zum Beispiel insgesamt sechs Rohranschlüsse zweckmäßig sein, um Medien zu dem Reformerbrenner 29, der Brennstoffzelle 7, dem Verdampferbrenner 25, dem Reformierreaktor 21, der Shift-Stufe 44 und dem Wärmetauscher 45 zuzuführen. Entsprechend sind dann Rohranschlüsse 52 als Komponentenanschlüsse bereitzustellen.

Im Inneren der Leitungseinrichtung 100 ist eine Luftzuführung 54 dargestellt, die durch die blockartige Leitungseinrichtung 100 verläuft und schließlich die Flanschplatte 51 durchdringt.

Im Inneren der Luftzuführung 54, die in den Rohranschluss 52 mündet, ist eine Flüssiggasführung 55 konzentrisch geführt. Die Öffnung 55a der rohrartigen Flüssiggasführung 55 ist in einen Bereich außerhalb der Leitungseinrichtung 100 verlagert, also bereits in das Innere des zugehörigen Reformer-Teilsystems 6 oder der Brennstoffzelle 7. Auf diese Weise kann verhindert werden, dass die Mischung zwischen Luft und Kraftstoff noch in der eigentlichen Leitungseinrichtung 100, sondern erst stromab davon erfolgt.

Die Mischstelle von Flüssiggas und Luft wird somit aus dem Block 100 in die Medienzuführung der Reformer-Teilsysteme 6 verlagert. Dies ist vor allem dann sinnvoll, wenn die blockartige Leitungseinrichtung 100 aus einem brennbaren Kunststoff hergestellt wird.

Fig. 5 zeigt ein Beispiel für das Messen der Masse eines Medienstroms, also ein Beispiel für eine der Massenstrommesseinrichtungen 19, 32, 35, 38.

Wie oben bereits dargelegt, ist es für die Regelung und Dosierung der Medienströme vorteilhaft, den Massenstrom der jeweiligen Teilmedienströme zu erfassen. Diese Messung wird bevorzugt über einen Bypass durchgeführt. Dazu wird in einem Luftstrom 56 ein definierter Druckverlust über eine Blende 57 erzeugt und somit über den Bypass ein Teilmassenstrom 58 abgezweigt und über einen Sensor 59, zum Beispiel einen Massenstrommesser, geleitet. Um die Toleranzen der Messung einzugrenzen, kann in dem Bypass ein Justierelement 60 zur mechanischen Kalibrierung integriert werden. Über das Justierelement 60, zum Beispiel eine Schraube oder eine einstellbare Drossel, kann der Druckverlust im Bypass und damit der Teilmassenstrom 58, der über den Sensor 59 geleitet wird, verändert und präzise eingestellt werden.

## Patentansprüche

1. Reformer-Brennstoffzellen-System (8) mit
- einer zentralen Medienversorgungseinheit mit einer Leitungseinrichtung (100) zum Bereitstellen von Leitungen (9) zum Führen von Luft und fließfähigem Kraftstoff;
- einem an der Leitungseinrichtung (100) angeordneten Luftversorgungsanschluss (2) zum Anschließen einer Luftversorgungseinrichtung (4);
- einem an der Leitungseinrichtung angeordneten Kraftstoffanschluss (3) zum Anschließen einer Kraftstoffversorgungseinrichtung (5);
- an der Leitungseinrichtung (100) angeordneten Komponenten-Anschlüssen (52) zum Anschließen von Komponenten (6, 7) des Reformer-Brennstoffzellen-Systems (8);
wobei
- wenigstens einige der Leitungen (9) als Medienteilströmungswege dienen, zum Führen von Luft und/oder Kraftstoff als jeweilige Medienteilströme zu den betreffenden Komponenten-Anschlüssen;
- in wenigstens einem der Medienteilströmungswege eine Messvorrichtung (M), eine Regelvorrichtung (R) und/oder eine Mischvorrichtung (X) angeordnet ist;
- durch die jeweiligen Messvorrichtungen (M), Regelvorrichtungen (R) und/oder Mischvorrichtungen (X) das jeweils zugeführte Medium in einem für die betreffende Komponente geeigneten Zustand am Komponenten-Anschluss zugeführt wird;
- die Leitungseinrichtung (100) als massiver Block in Form einer einstückigen oder aus zwei Hälften bestehenden Komponente ausgebildet ist, in deren Innerem die Leitungen bzw. Medienteilströmungswege ausgebildet sind;
- die Messvorrichtung (M), die Regelvorrichtung (R) und/oder die Mischvorrichtung (X) innen in oder außen an dem massiven Block befestigt sind; und wobei
- die Anschlüsse an dem massiven Block angeordnet sind.

2. Reformer-Brennstoffzellen-System (8) nach Anspruch 1, **dadurch gekennzeichnet, dass**
- an der Leitungseinrichtung (100) ein Flüssigkeitsanschluss angeordnet ist, zum Zuführen von Wasser oder einem Wasser/Flüssigkraftstoff-Gemisch.

3. Reformer-Brennstoffzellen-System (8) nach Anspruch 1 oder 2, **dadurch gekennzeichnet, dass** eine Steuerungseinrichtung vorgesehen ist, zum Messen und Regeln der einzelnen Medienteilströme in den Medienteilströmungswegen.

4. Reformer-Brennstoffzellen-System (8) nach einem der vorangehenden Ansprüche, **dadurch gekennzeichnet, dass**
- wenigstens eine in einen der Medienteilströmungswege integrierte Messvorrichtung (M) vorgesehen ist; und dass
- der in dem betreffenden Medienteilströmungsweg strömende Medienteilstrom in Abhängigkeit von Messwerten von der betreffenden integrierten Messvorrichtung geregelt wird.

5. Reformer-Brennstoffzellen-System (8) nach einem der vorangehenden Ansprüche, **dadurch gekennzeichnet, dass**
- an der Leitungseinrichtung (100) eine Flanschplatte (51) angeordnet ist;
- die Komponenten-Anschlüsse (52) an der Flanschplatte (51) angeordnet sind.

6. Reformer-Brennstoffzellen-System (8) nach einem der vorangehenden Ansprüche, **dadurch gekennzeichnet, dass**
- ein Komponentenanschluss als Rohranschluss (52) an der Flanschplatte (51) angeordnet ist, an dem ein Luft/Kraftstoff-Gemisch bereitgestellt wird;
- der Rohranschluss (52) ein Luft führendes Außenrohr (54) und ein Kraftstoff führendes Innenrohr (55) aufweist, das in dem Außenrohr (54) angeordnet ist; und dass
- eine Auslassöffnung des Innenrohrs (55) in einem Bereich angeordnet ist, der außerhalb der Leitungseinrichtung (100) angeordnet ist.

7. Reformer-Brennstoffzellen-System (8) nach einem der vorstehenden Ansprüche, wobei die Komponenten (6, 7) des Reformer-Brennstoffzellen-Systems (8) ausgewählt sind aus der Gruppe:
- Reformer-Teilsysteme (6), die nur mit Kraftstoff zu versorgen sind;
- Reformer-Teilsysteme (6), die nur mit Luft zu versorgen sind, wobei die Luft als Kühlluft und/oder als Reaktionsluft bereitgestellt wird;
- Reformer-Teilsysteme (6), die mit Kraftstoff-Luft-Gemischen zu versorgen sind;
- Brennstoffzelle (7), die mit Luft zu versorgen ist, wobei die Luft als Kühlluft und/oder als Reaktionsluft bereitgestellt wird.

8. Reformer-Brennstoffzellen-System nach Anspruch 7, **dadurch gekennzeichnet, dass** in der Kraftstoffzuleitung eine Kraftstoffaufbereitungsvorrichtung (16) angeordnet ist.

9. Reformer-Brennstoffzellen-System nach Anspruch 7 oder 8, **dadurch gekennzeichnet, dass**
- an der Steuerungseinrichtung ein Eingang zum Anschließen einer externen, nicht in einem der Medienteilströmungswege angeordneten Messvorrichtung vorgesehen ist; und dass
- wenigstens einer der Medienteilströme in Abhängigkeit von Messwerten von der externen Messvorrichtung geregelt wird.

10. Verfahren für eine zentrale Medienversorgung für ein Reformer-Brennstoffzellen-System (8), mit den Schritten
- Bereitstellen einer blockartigen Leitungseinrichtung (100), mit Versorgungsanschlüssen (2, 3) zum Zuführen von Medienströmen zu der Leitungseinrichtung (100) und mit Komponenten-Anschlüssen (52), an denen Komponenten (6, 7) des Reformer-Brennstoffzellen-Systems (8) an der Leitungseinrichtung (100) angeschlossen werden, wobei die blockartige Leitungseinrichtung (100) eine einstückige oder aus zwei Hälften bestehende Komponente ist, in deren Innerem Leitungen bzw. Medienteilströmungswege ausgebildet sind;
- Zuführen von Medienströmen zu den Versorgungsanschlüssen (2, 3) an der Leitungseinrichtung (100), wobei als Medien Luft und fließfähigem Kraftstoff vorgesehen sind;
- Aufteilen der Medienströme in der blockartigen Leitungseinrichtung (100) und Führen der Medienströme zu den Komponenten-Anschlüssen (52);
- Während des Durchführens der Medienströme durch die blockartige Leitungseinrichtung (100) Messen, Regeln und/oder Mischen der Medienströme in der Leitungseinrichtung (100).

11. Verfahren nach Anspruch 10 zum Regeln von Medienströmen für ein Reformer-Brennstoffzellen-System (8), mit den Schritten
- Zuführen eines zu den Medienströmen gehörenden Medienstroms durch eine Medienzuführeinrichtung (4, 5) zu einer die blockartige Leitungseinrichtung (100) aufweisenden Medienversorgungseinrichtung (1);
- Aufteilen des Medienstroms in mehrere Teilmedienströme, die jeweils durch einen Medien-Teilströmungsweg strömen, wobei wenigstens ein Teil der Medien-Teilströmungswege eine Regelvorrichtung (R) aufweist;
- Vollständiges Öffnen von einer Regelvorrichtung (R) in einem der Medien-Teilströmungswege und entsprechendes Einstellen der Medienzuführeinrichtung (4, 5), um in diesem Medien-Teilströmungsweg die zum Betrieb des Reformer-Brennstoffzellen-Systems (8) erforderliche Medienstrommenge zu erhalten;
- Einstellen der Regelvorrichtungen (R) in den anderen Medien-Teilströmungswegen, um in diesen Medien-Teilströmungswegen die zum Betreiben des Reformer-Brennstoffzellen-Systems (8) erforderlichen Medienstrommengen zu erhalten.

12. Verfahren nach Anspruch 11, mit den Schritten
- Festlegen von Soll-Medienstrommengen für die Medien-Teilströmungswege in Abhängigkeit von den Erfordernissen eines Betriebs des Reformer-Brennstoffzellen-Systems (8);
- Messen der Medienstrommengen in den Medien-Teilströmungswegen und Überwachen, ob in dem jeweiligen Medien-Teilströmungsweg die geforderte Soll-Medienstrommenge bereitgestellt wird;
- Einstellen der jeweiligen Regelvorrichtung (R) derart, dass die geforderte Soll-Medienstrommenge in dem Medien-Teilströmungsweg erreicht wird;
- wenn festgestellt wird, dass eine Medien-Teilstrommenge auch bei vollständig geöffneter Regelvorrichtung (R) nicht erreichbar ist, entsprechendes Einstellen der Medienzuführeinrichtung (4, 5) und Erhöhen der gesamten Medienstrommenge bzw. des Drucks;
- Entsprechendes Einstellen der anderen, nicht vollständig geöffneten Regelvorrichtungen (R), um jeweils die geforderte Soll-Medienstrommenge in den Medien-Teilströmungswegen zu erreichen.

13. Verfahren nach Anspruch 11 oder 12, mit dem Schritt
- wenn festgestellt wird, dass keine der Regelvorrichtungen (R) vollständig geöffnet ist, entsprechendes Einstellen der Medienzuführeinrichtung und Vermindern der gesamten Medienstrommenge so lange, bis festgestellt wird, dass eine der Regelvorrichtungen (R) vollständig geöffnet ist.

14. Verfahren nach einem der Ansprüche 11 bis 13, wobei die Maßnahme des vollständigen Öffnens einer Regelvorrichtung (R) bedeutet, dass die Regelvorrichtung bis zu einem vorgegebenen Öffnungsgrenzwert oder darüber hinaus geöffnet wird.

15. Verfahren nach Anspruch 10 zum Regeln von Medienströmen für ein Reformer-Brennstoffzellen-System (8), mit den Schritten
- Zuführen eines als Medienstrom dienenden Kraftstoffstroms und eines als Medienstrom dienenden Luftstroms zu einer die blockartige Leitungseinrichtung (100) aufweisenden Medienversorgungseinrichtung (1), wobei wenigstens einer der Medienströme durch eine Medienzuführeinrichtung (5) mit einem konstanten Vordruck zugeführt wird;
- in der Medienversorgungseinrichtung Aufteilen des Kraftstoffstroms und des Luftstroms in mehrere Medien-Teilströme;
- in der Medienversorgungseinrichtung (1) Regeln der Medien-Teilströme in Abhängigkeit von einem aktuellen Betriebszustand des Reformer-Brennstoffzellen-Systems (8).

## Claims

1. Reformer fuel cell system (8) with
- a central media provision unit with a conduit facility (100) for provision of conduits (9) for carrying air and free-flowing fuel;
- an air supply connection (2) arranged on the conduit facility (100) for connecting to an air supply device (4);
- a fuel connection (3) arranged on the conduit facility (3) for connecting to a fuel supply device (5):
- component connections (52) arranged on the conduit facility (100) for connecting components (6, 7) of the reformer fuel cell system (8);
wherein
- at least some of the conduits (9) act as partial media flow routes for carrying air and/or fuel as respective partial media streams to the related component connections;
- a measuring device (M), a regulating device (R) and/or a mixing device (X) is arranged in at least one of the partial media flow routes;
- the respective supplied medium is supplied by the respective measuring devices (M), regulating devices (R) and/or mixing devices (X) in a state suitable for the related component to the component connection;
- the conduit facility (100) is configured as solid block in the form of a component consisting of one piece or two halves, in the interior of which the conduits or partial media flow routes are formed;
- the measuring device (M), the regulating device (R) and/or the mixing device (X) are fastened internally or externally to the solid block; and wherein
- the connections are arranged on the solid block.

2. Reformer fuel cell system (8) in accordance with claim 1, **characterised in that**
- a fluid connection is arranged on the conduit facility (100) for supply of water or a water/liquid fuel mixture.

3. Reformer fuel cell system (8) in accordance with claim 1 or 2, **characterised in that** a control device is provided for measurement and regulation of the individual partial media streams in the partial media flow routes.

4. Reformer fuel cell system (8) in accordance with one of the preceding claims, **characterised in that**
- at least one measuring device (M) is integrated into one of the partial media flow routes; and that
- the partial media flow stream flowing in the related partial media flow route is regulated in dependence on measurements from the related integrated measuring device.

5. Reformer fuel cell system (8) in accordance with one of the preceding claims, **characterised in that**
- a flange plate (51) is arranged on the conduit facility (100);
- the component connections (52) are arranged on the flange plate (51).

6. Reformer fuel cell system (8) in accordance with one of the preceding claims, **characterised in that**
- a component connection as pipe connection (52) is arranged on the flange plate (51), at which an air/fuel mixture is provided;
- the pipe connection (52) has an external pipe (54) carrying air and an internal pipe (55) carrying fuel, which is positioned in the external pipe (54); and that
- an outlet opening of the internal pipe (55) is positioned in an area which is outside the conduit facility (100).

7. Reformer fuel cell system (8) in accordance with one of the preceding claims,
wherein the components (6, 7) of the reformer fuel cell system (8) are selected from the group:
- reformer subsystems (6), which are only to be provided with fuel;
- reformer subsystems (6), which are only to be provided with air, wherein the air is supplied as cooling air and/or as reaction air;
- reformer subsystems (6), which are only to be supplied with fuel-air mixtures;
- fuel cell (7), which is to be supplied with air, wherein the air is provided as cooling air and/or as reaction air.

8. Reformer fuel cell system (8) in accordance with claim 7, **characterised in that** a fuel processing device (16) is arranged in the fuel supply line.

9. Reformer fuel cell system (8) in accordance with claim 7 or 8, **characterised in that**
- an input is provided on the control device for connection of an external measuring device not arranged on one of the media flow paths; and that
- at least one of the partial media streams is regulated according to the measurements by the external measuring device.

10. Method for a central media supply for a reformer fuel cell system (8), with the steps
- provision of a block-like conduit facility (100), with supply connections (2, 3) for supplying media streams to the conduit facility (100) and with component connections (52), to which components (6, 7) of reformer fuel cell system (8) are connected to the conduit facility (100), wherein the block-like conduit facility (100) is a component in one piece or consisting of two halves, in the interior of which conduits or partial media flow routes are formed;
- supply of media streams to the supply connections (2, 3) to the conduit facility (100), wherein air and free-flowing fuel are provided as media;
- separation of the media streams in the block-like conduit facility (100) and carrying of the media streams to the component connections (52);
- measurement, regulation and/or mixing the media streams in the conduit facility (100) while the media streams are passing through the block-like conduit facility (100).

11. Method in accordance with claim 10 or regulating media streams for a reformer fuel cell system (8), with the steps
- supply of a media stream forming one of the media streams by a media supply device (4, 5) to a media provision device (1) having the block-like conduit facility (100);
- division of the media stream into several partial media streams, which each flow through a partial media flow route, wherein at least one part of the partial media flow routes has a regulating device (R);
- full opening of a regulating device (R) in one of the partial media stream routes and corresponding adjustment of the media supply device (4, 5), to obtain the media stream amount required for operation of the reformer fuel cell system(8) in this partial media stream route;
- adjustment of the regulating devices (R) in the other partial media stream routes, to obtain the media stream amounts required for operation of the reformer fuel cell system (8).

12. Method in accordance with claim 11, with the steps
- determination of target media stream amounts for the partial media stream flow routes according to the requirements of an operation of the reformer fuel cell system (8);
- measurement of the partial media stream amounts in the partial media flow routes and monitoring whether the required target media stream amount is provided in the respective partial media flow route;
- adjustment of the respective regulating device (R) so that the required target media stream amount is achieved in the partial media flow route;
- if it is established that a partial media flow amount cannot be achieved even when the regulating device (R) is fully open, appropriate adjustment of the media supply device (4, 5) and increase of the total media flow amount or pressure;
- corresponding adjustment of the other, not fully open regulating devices (R), in order to achieve the required target media flow amount in each case.

13. Method in accordance with claim 11 or 12, with the step
- if it is determined that none of the regulating devices (R) is fully open, appropriate adjustment of the media supply device and reduction of the overall media flow amount and until it is determined that one of the regulating devices (R) is fully open.

14. Method in accordance with one of the claims 11 to 13, wherein the measure of fully opening a regulating device (R) signifies that the regulating device is opened to a predetermined opening limit level or beyond this.

15. Method in accordance with claim 10 or regulating media streams for a reformer fuel cell system (8), with the steps
- supply of a fuel stream serving as media stream and an air stream serving as media stream to a media provision device (1) having a block-like conduit facility (100), whereby at least one of the media streams is supplied by a media supply device (5) at a constant admission pressure;
- division of the fuel stream and the air stream into several partial media streams in the media provision device;
- regulation of the partial media streams in the media provision device (1) according to the current operating state of the reformer fuel cell system (8).

## Revendications

1. Système de piles à combustible à reformeur (8) avec
- une unité d'alimentation centrale en fluide pourvue d'un dispositif à conduites (100) pour fournir des conduites (9) pour guider de l'air et un carburant fluide ;
- un raccord d'alimentation en air (2), disposé sur le dispositif à conduites (100), pour le raccordement d'un dispositif d'alimentation en air (4) ;
- un raccord de carburant (3), disposé sur le dispositif à conduites, pour le raccordement d'un dispositif d'alimentation en carburant (5) ;
- des raccords de composants (52), disposés sur le dispositif à conduites (100), pour le raccordement de composants (6, 7) du système de piles à combustible à reformeur (8) ;
étant précisé
- que quelques-unes au moins des conduites (9) servent de voies d'écoulement partiel de fluide pour amener l'air et/ou le carburant sous forme de courants partiels de fluide respectifs jusqu'aux raccords de composants concernés ;
- qu'il est prévu dans l'une au moins des voies d'écoulement partiel de fluide un dispositif de mesure (M), un dispositif régulateur (R) et/ou un dispositif mélangeur (X) ;
- que grâce aux dispositifs de mesure (M), aux dispositifs régulateurs (R) et/ou aux dispositifs mélangeurs (X) respectifs, chaque fluide amené est amené jusqu'au raccord de composant dans un état qui convient au composant concerné ;
- que le dispositif à conduites (100) est conçu comme un bloc massif sous la forme d'un composant d'une seule pièce ou composé de deux moitiés, à l'intérieur duquel sont formées les conduites et voies d'écoulement partiel de fluide ;
- que le dispositif de mesure (M), le dispositif régulateur (R) et/ou le dispositif mélangeur (X) sont fixés intérieurement dans le bloc massif, ou extérieurement sur celui-ci ; et
- que les raccords sont disposés sur le bloc massif.

2. Système de piles à combustible à reformeur (8) selon la revendication 1, **caractérisé**
- **en ce qu'**il est prévu sur le dispositif à conduites (100) un raccord de liquide pour amener de l'eau ou un mélange eau/carburant liquide.

3. Système de piles à combustible à reformeur (8) selon la revendication 1 ou 2, **caractérisé en ce qu'**il est prévu un dispositif de commande pour mesurer et réguler les courants partiels de fluide individuels dans les voies d'écoulement partiel de fluide.

4. Système de piles à combustible à reformeur (8) selon l'une des revendications précédentes, **caractérisé**
- **en ce qu'**il est prévu au moins un dispositif de mesure (M) intégré dans l'une des voies d'écoulement partiel de fluide ; et
- **en ce que** le courant partiel de fluide qui s'écoule dans la voie d'écoulement partiel de fluide est régulé en fonction de valeurs de mesure du dispositif de mesure intégré concerné.

5. Système de piles à combustible à reformeur (8) selon l'une des revendications précédentes, **caractérisé**
- **en ce qu'**il est prévu sur le dispositif à conduites (100) une plaque formant collerette (51) ;
- **en ce que** les raccords de composants (52) sont disposés sur la plaque formant collerette (51).

6. Système de piles à combustible à reformeur (8) selon l'une des revendications précédentes, **caractérisé**
- **en ce qu'**il est prévu sur la plaque formant collerette (51) un raccord de composant sous forme de raccord de tuyau (52) au niveau duquel est fourni un mélange air/carburant ;
- **en ce que** le raccord de tuyau (52) comporte un tuyau extérieur (54) qui achemine l'air, et un tuyau intérieur (55) qui achemine le carburant et qui est disposé dans le tuyau extérieur (54) ; et
- **en ce qu'**une ouverture de sortie du tuyau intérieur (55) est disposée dans une zone qui se trouve à l'extérieur du dispositif à conduites (100).

7. Système de piles à combustible à reformeur (8) selon l'une des revendications précédentes, étant précisé que les composants (6, 7) du système de piles à combustible à reformeur (8) sont sélectionnés dans le groupe suivant :
- systèmes partiels à reformeur (6) qui doivent être alimentés seulement en carburant ;
- systèmes partiels à reformeur (6) qui doivent être alimentés seulement en air, l'air étant fourni sous la forme d'air de refroidissement et/ou d'air de réaction ;
- systèmes partiels à reformeur (6) qui doivent être alimentés en mélanges carburant-air ;
- pile à combustible (7) qui doit être alimentée en air, l'air étant fourni sous la forme d'air de refroidissement et/ou d'air de réaction.

8. Système de piles à combustible à reformeur (8) selon la revendication 7, **caractérisé en ce qu'**il est prévu dans la conduite d'amenée de carburant un dispositif de préparation de carburant (16).

9. Système de piles à combustible à reformeur (8) selon la revendication 7 ou 8, **caractérisé**
- **en ce qu'**il est prévu au niveau du dispositif de commande une entrée pour le raccordement d'un dispositif de mesure externe qui n'est pas disposé dans l'une des voies d'écoulement partiel de fluide ; et
- **en ce que** l'un au moins des courants de fluide est régulé en fonction de valeurs de mesure du dispositif de mesure externe.

10. Procédé pour une alimentation centrale en fluide pour un système de piles à combustible à reformeur (8), avec les étapes qui consistent
- à prévoir un dispositif à conduites en forme de bloc (100), avec des raccords d'alimentation (2, 3) pour amener des courants de fluide jusqu'au dispositif à conduites (100) et avec des raccords de composants (52) au niveau desquels des composants (6, 7) du système de piles à combustible à reformeur (8) sont raccordés au dispositif à conduites (100), étant précisé que le dispositif à conduites en forme de bloc (100) est un bloc d'une seule pièce ou composé de deux moitiés, à l'intérieur duquel sont formées les conduites et voies d'écoulement partiel de fluide ;
- à amener des courants de fluide jusqu'aux raccords d'alimentation (2, 3) prévus sur le dispositif à conduites (100), étant précisé qu'il est prévu comme fluides de l'air et un carburant fluide ;
- à diviser les courants de fluide dans le dispositif à conduites en forme de bloc (100) et à guider les courants de fluide jusqu'aux raccords de composants (52) ;
- pendant que les courants de fluide traversent le dispositif à conduites en forme de bloc (100), à mesurer, réguler et/ou mélanger les courants de fluide dans le dispositif à conduites (100).

11. Procédé selon la revendication 10 pour la régulation de courants de fluide pour un système de piles à combustible à reformeur (8), avec les étapes qui consistent
- à amener un courant de fluide faisant partie des courants de fluide jusqu'à un dispositif d'alimentation en fluide (1) qui comporte le dispositif à conduites en forme de bloc (100), grâce à un dispositif d'amenée de fluide (4, 5) ;
- à diviser le courant de fluide en plusieurs courants de fluide qui s'écoulent par une voie d'écoulement partiel de fluide, une partie au moins des voies d'écoulement partiel de fluide comportant un dispositif régulateur (R) ;
- à ouvrir complètement un dispositif régulateur (R) dans l'une des voies d'écoulement partiel de fluide et à régler en conséquence le dispositif d'amenée de fluide (4, 5), afin d'obtenir dans cette voie d'écoulement partiel de fluide la quantité de courant de fluide nécessaire au fonctionnement du système de piles à combustible à reformeur (8) ;
- à régler les dispositifs régulateurs (R) dans les autres voies d'écoulement partiel de fluide afin d'obtenir dans ces voies d'écoulement partiel de fluide les quantités de courant de fluide nécessaires au fonctionnement du système de piles à combustible à reformeur (8).

12. Procédé selon la revendication 11, avec les étapes qui consistent
- à fixer des quantités d'écoulement de fluide théoriques pour les voies d'écoulement partiel de fluide en fonction des exigences d'un fonctionnement du système de piles à combustible à reformeur (8),
- à mesurer les quantités de courant partiel dans les voies d'écoulement partiel de fluide et à contrôler s'il y a dans la voie d'écoulement partiel de fluide respective la quantité de courant partiel théorique ;
- à régler le dispositif régulateur (R) respectif de telle sorte que la quantité de courant de fluide théorique soit atteinte dans la voie d'écoulement partiel de fluide ;
- si on constate qu'une quantité de courant partiel de fluide ne peut pas être atteinte même avec le dispositif régulateur (R) complètement ouvert, à régler en conséquence le dispositif d'amenée de fluide (4, 5) et à augmenter la quantité de courant partiel totale ou la pression ;
- à régler en conséquence les autres dispositifs régulateurs (R), qui ne sont pas complètement ouverts, afin d'atteindre dans les voies d'écoulement partiel de fluide la quantité de courant de fluide théorique requise.

13. Procédé selon la revendication 11 ou 12, avec les étapes qui consistent
- si on constate qu'aucun des dispositifs régulateurs (R) n'est complètement ouvert, à régler en conséquence le dispositif d'amenée de fluide et à réduire la quantité de courant de fluide totale jusqu'à ce que l'on constate que l'un des dispositifs régulateurs (R) est complètement ouvert.

14. Procédé selon l'une des revendications 11 à 13, étant précisé que la mesure consistant à ouvrir complètement un dispositif régulateur (R) signifie que le dispositif régulateur s'ouvre jusqu'à une valeur limite d'ouverture prédéfinie ou au-delà.

15. Procédé selon la revendication 10 pour la régulation de courants de fluide pour un système de piles à combustible à reformeur (8), avec les étapes qui consistent
- à amener un courant de carburant servant de courant de fluide, et un courant d'air servant de courant de fluide jusqu'à un dispositif d'alimentation en fluide (1) comportant le dispositif à conduites en forme de bloc (100), étant précisé que l'un au moins des courants de fluide est amené grâce à un dispositif d'amenée de fluide (5) avec une pression d'admission constante ;
- à diviser dans le dispositif d'alimentation en fluide le courant de carburant et le courant d'air en plusieurs courants partiels de fluide ;
- à réguler dans le dispositif d'alimentation en fluide (1) les courants partiels de fluide en fonction d'un état de fonctionnement actuel du système de piles à combustible à reformeur (8).
